# EUROPEAN PATENT APPLICATION

(11) **EP 4 717 093 A1**
(43) Date of publication of application: **01.04.2026**
(21) Application number: 25199731.8
(22) Date of filing: 02.09.2025
(51) Int. Cl.: A23G 3/22, A23G 3/34, A23P 20/18

(54) **METHOD FOR COATING FOOD PRODUCTS AND RELATED APPARATUS**

(30) Priority: 27.09.2024 IT 202400021466
(71) Applicant: Soremartec S.A., 2633 Senningerberg (LU)
(72) Inventor: MOLLO, Marco, L-2633 Senningerberg (LU); MENEGALDO, Enrico, L-2633 Senningerberg (LU); ARAGONE, Giovanni, L-2633 Senningerberg (LU); SANTUCCIONE, Francesco Antonio, L-2633 Senningerberg (LU)
(74) Representative: Buzzi, Notaro & Antonielli d'Oulx S.p.A.

(57) **Abstract**

A method for coating food products is described, comprising:
- providing a coating ingredient and forming a vertical curtain (2) with the coating ingredient in free fall;
- advancing, in succession, a plurality of rows of products (100) along a feed path (K), wherein the products of each row of products are mutually aligned along a common reference axis (Xi) parallel to a transverse direction (T) to the feed path (K) ;
- impinging the products (101) of each row of products (100) with the vertical curtain (2) to form a continuous coating (102) with the coating ingredient that deposits on them.

The method is characterized in that said step of forming a vertical curtain (2) includes:
- dispensing the coating ingredient through a dispensing slit (22) of a dispensing head (20), and
- feeding the coating ingredient to the dispensing slit (22) via a feed conduit (26) inside which the coating ingredient is maintained at a predetermined pressure by a pressure generating unit (27), so that a flow of the coating ingredient at a given flow rate is dispensed through said dispensing slit (22).

## Description

### Field of the invention

The present invention relates to a method for coating food products, for example confectionery products.

Known coating methods involve forming a vertical curtain of a coating ingredient in free fall, and advancing the products along a feed path that crosses the vertical curtain of the coating ingredient, so that a continuous coating formed by the coating ingredient is deposited on each product.

Subsequently, the products are passed over a vibrating device and under an air blowing device, the latter removing part of the coating ingredient to leave on the products a coating that is as homogeneous as possible and of predetermined weight.

In this context, the present invention aims to provide an improved solution for coating food products, particularly one that improves the quality of the coating applied to the products and is simpler and more versatile.

In general, the present invention relates to a coating method according to claim 1 and a coating system according to claim 10.

The claims form an integral part of the teaching provided herein.

Further features and advantages of the present invention will be apparent from the following description with reference to the accompanying drawings, provided by way of non-limiting example, in which:

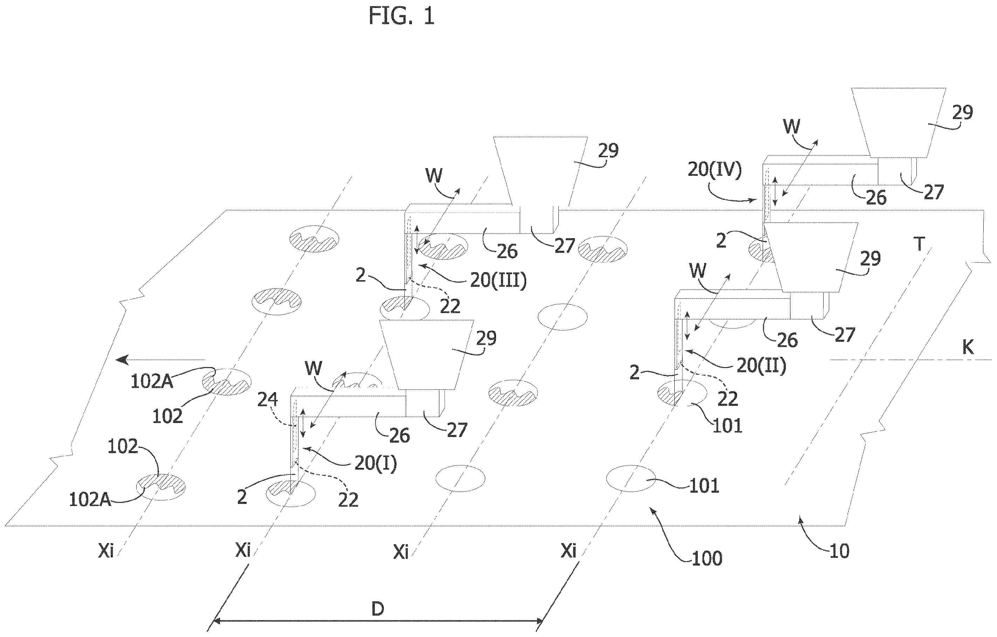

- Figure 1 shows an embodiment of the method and apparatus described herein.

In the following description, various specific details are illustrated for a thorough understanding of the embodiments. The embodiments may be implemented without one or more of the specific details, or with other methods, components, materials, etc. In other cases, known structures, materials, or operations are not shown or described in detail to avoid obscuring various aspects of the embodiment.

The references used herein are for convenience only and do not therefore define the scope of protection or the extent of the embodiments.

With reference to Figure 1, the method described herein comprises:
- advancing, in succession, a plurality of rows of products 100 along a feed path K; and
- forming a vertical curtain 2 with a coating ingredient in free fall, and
- impinging the products 101 of each row of products 100 with the vertical curtain 2 to form a continuous coating 102 with the coating ingredient of the vertical curtain that deposits on them.

In general, the coating ingredient can be any flowable ingredient that can be transported by hydraulic pressure. Preferably, the coating ingredient is a liquid, for example chocolate in liquid state.

In one or more preferred embodiments, like the one illustrated, the plurality of rows of products 100 can be transported by a conveyor 10, for example a belt conveyor, along the feed path K.

The products 101 of each row of products 100 are aligned along a common reference axis Xi parallel to a direction T transverse to the feed path K.

In one or more preferred embodiments, like the one illustrated, the step of forming the vertical curtain 2 involves using at least one dispensing head 20 comprising a dispensing slit 22 having a width preferably not exceeding 250 microns.

Correspondingly, the vertical curtain 2 dispensed by the dispensing head 20 has a thickness not exceeding 250 microns.

As will be seen later, the dispensing slit 22 preferably also has a length - in the transverse direction T - limited to operate on a single product at a time; in general, the dispensing slit 22 may for example have a length between 20 mm and 50 mm, depending on the needs of specific applications.

In one or more preferred embodiments, like the one illustrated, the system described herein further comprises a feed conduit 26 configured to feed the coating ingredient to the dispensing slit 22, and a pressure generating unit 27 configured to generate a given pressure inside the feed conduit 26; in other words, the coating ingredient transported by the feed conduit 26 is at a given pressure due to the action of the pressure generating unit 27.

The pressure generating unit 27 can be a pump of known type capable of ensuring a precise and constant flow rate of the coating ingredient flow.

The coating ingredient can be contained in a tank 29 arranged to feed the ingredient to the feed conduit 26.

In operation, the dispensing head 20 dispenses through the dispensing slit 22 a flow of the coating ingredient that forms the vertical curtain 2; the flow rate of the coating ingredient flow can be controlled via the pressure generating unit 27, by varying the pressure generated inside the feed conduit 26.

In one or more preferred embodiments, the dispensing head 20 comprises a shutter member 24, which is configured to engage the dispensing slit 22 and is linearly movable, preferably along a vertical direction, between a closed position, in which the passage for the coating ingredient through the dispensing slit 22 is closed by the shutter member 24, and an open position, in which said passage is instead open and the coating ingredient can thus be dispensed through the dispensing slit 22.

Preferably, the shutter member 24 is further configured to perform, by its movement from the open position to the closed position, a mechanical action of removing residues of the coating ingredient from inside the dispensing slit 22.

In one or more preferred embodiments, the shutter member 24 has a laminar body that, in at least one part thereof, has a cross-section substantially corresponding, in shape and size, to the internal cross-section of the dispensing slit 22; with this part of its body, the shutter member 24 can insert into the dispensing slit 22 to close the passage through the dispensing slit 22 to the coating ingredient and simultaneously remove any residues of the coating ingredient remaining inside the same slit.

In one or more preferred embodiments (not illustrated), the shutter member 24 can also be configured to vary a flow section of the passage for the coating ingredient through the dispensing slit 22, depending on its position along its direction of movement.

By controlling the position of the shutter member 24, the flow rate of the coating ingredient flow through the dispensing slit 22 can thus be regulated.

For example, the body of the shutter member 24 may have at least one conical portion extending along its direction of movement, which delimits a passage for the coating ingredient together with the internal walls of the dispensing slit 22, and which determines a variation in the flow section of said passage as a result of a variation in the position of the shutter member 24 along its direction of movement.

In view of the above, it will be clear to the skilled person that, thanks to the above-mentioned characteristics, the coating system described herein is capable of applying the coating ingredient onto the products 101 through a very thin curtain 2 characterized by a predetermined flow rate.

This allows the system to produce coatings, on the products, having predefined thickness and weight; therefore, the subsequent step of removing part of the coating ingredient commonly performed in prior art solutions (mentioned at the beginning) - via a vibrating device and an air blowing device - is no longer necessary.

In operation, the dispensing of the vertical curtain 2 by the dispensing head 20 occurs simultaneously with the advancement of the products 101 along the feed path K by the conveyor 10, so that the vertical curtain 2 impinges the respective moving product 101 and forms a continuous coating 102 consisting of the coating ingredient at least on the upper side of the product.

In other words, the advancement movement of the products 101 along the feed path K is exploited to determine a relative movement between the dispensing heads 20 and the products, which allows distributing the coating ingredient on the upper side thereof.

Optionally, depending on the needs of specific applications, the dispensing head 20 may also be subjected to a tracking movement along the feed path K to follow the products 101, in any case always determining a relative movement between the dispensing heads 20 and the products 101 as indicated above.

In one or more preferred embodiments, like the one illustrated, the system described herein comprises a plurality of dispensing heads 20, which all have a structure identical to that described above, and which are distinguished from each other in the figure by the references 20(I), 20(II), 20(III) and 20(IV).

The dispensing heads 20(I), 20(II), 20(III), 20(IV) are mutually spaced along the transverse direction T and each comprise a dispensing slit 22 extending longitudinally along the transverse direction T for a limited length so that the vertical curtain 2 dispensed therefrom impinges only a respective product 101 of the row of products 100. In an alternative embodiment, the vertical curtain 2 dispensed by each dispensing head 20 may also impinge a portion of an adjacent product of the row of products 100, as will be described in more detail below.

Furthermore, in one or more preferred embodiments, like the one illustrated, the dispensing heads 20(I), 20(II), 20(III), 20(IV) are arranged in a mutually misaligned condition with reference to a direction parallel to the transverse direction T, such that each dispensing head is positioned along the feed path K at a position differing from the position of the adjacent dispensing head or heads of said plurality of dispensing heads 20(I), 20(II), 20(III), 20(IV).

In the illustrated example, the dispensing head 20(II) is shifted in the direction opposite to the product advancement direction relative to the two adjacent dispensing heads 20(I), 20(III), and similarly, the dispensing head 20(IV) is shifted in the same direction relative to the adjacent dispensing head 20(III); on the other hand, the dispensing heads 20(I), 20(III) and the dispensing heads 20(II), 20(IV) are instead arranged, in pairs, mutually aligned along a direction parallel to the transverse direction T.

In an alternative embodiment, the dispensing heads may instead all be misaligned with each other with reference to a direction parallel to the transverse direction T.

In view of the above, it will therefore be understood that the misaligned condition of the dispensing heads 20 refers solely to the mutual arrangement between adjacent dispensing heads (along a direction parallel to the transverse direction T), while, within the overall arrangement of the dispensing heads, it is also possible to provide dispensing heads that are mutually aligned (along a direction parallel to the transverse direction T), depending on the needs of specific applications.

The arrangement according to the described misaligned condition allows compacting the formation of the dispensing heads 20 laterally, along the transverse direction T, with the consequence that the products 101 of each row of products can also be arranged, on the conveyor 10, close to each other along the same direction. As will be seen below, this also allows the implementation of embodiments wherein the vertical curtains 2 dispensed by two adjacent dispensing heads partially overlap along a direction parallel to the feed path K, so that both curtains impinge a portion of each of the respective adjacent products of the row of products 100.

Moreover, it will be understood that due to said misaligned arrangement, in operation the vertical curtains 2 dispensed by the plurality of dispensing heads 20(I), 20(II), 20(III), 20(IV) will impinge the respective products of the same row of products 100 at different times.

With particular reference to the illustrated example, the vertical curtains dispensed by the dispensing heads 20(II), 20(IV) will impinge the respective products 101 of a row of products 100 earlier than the vertical curtains dispensed by the dispensing heads 20(I), 20(III).

It can now be observed that, unlike prior art solutions wherein a hopper forms a single vertical curtain configured to simultaneously impinge all products of a row, the solution described herein advantageously employs the plurality of dispensing heads 20(I), 20(II), 20(III), 20(IV) to form a number of vertical curtains corresponding to the number of products in the row; each vertical curtain is very thin and characterized by a predetermined flow rate, so that the coatings formed on the products of the row are homogeneous with each other and have predefined thickness and weight.

In one or more preferred embodiments, like the one illustrated, the dispensing heads 20(I), 20(II), 20(III), 20(IV) are configured to form vertical curtains capable, by virtue of their width along the transverse direction T, of covering with the coating ingredient only a portion of the respective products 101 of the row of products 100, leaving an adjacent portion uncovered.

In the illustrated example, the vertical curtains 2 cover half of the products 101, leaving the other half uncovered.

Advantageously, in one or more preferred embodiments, as illustrated, the dispensing heads 20(I), 20(II), 20(III), 20(IV) are arranged so that the coatings 102 formed by them on adjacent products 101 of a row of products 100 are in mutually facing positions and, even more preferably, are substantially symmetrical relative to a symmetry axis parallel to the feed path K.

In the illustrated example, the coatings 102 formed by the dispensing heads 20(I), 20(II) on the first pair of left-hand products 101 (looking in the product advancement direction) are symmetrical relative to a symmetry axis parallel to the feed path K, and the same applies to the second pair of right-hand products 101, whose coatings 102 are formed by the dispensing heads 20(III), 20(IV).

This arrangement offers the advantage of ensuring that the portions of the products intended to be coated face each other, while the portions of the products intended to remain uncoated are instead maintained on the outer side of the dispensing heads; in this way, the risk of the latter becoming soiled is significantly reduced, even in applications where the products 101 of the row 100 are arranged very close to each other (along a direction parallel to the transverse direction T).

As already mentioned above, optionally the dispensing heads 20(I), 20(II), 20(III), 20(IV) may be mutually arranged, in pairs, at a distance along a direction parallel to the transverse direction T, such that the respective vertical curtains 2 partially overlap along a direction parallel to the feed path K, and both impinge a confined portion of each of the respective adjacent products 101 of the row of products 100.

This allows depositing a double quantity of the coating ingredient on said confined portion of the products 101, for example for aesthetic purposes. In some applications, said confined portion may comprise a lateral edge of the products, to compensate for material loss that may occur at such an edge due to gravity.

In one or more preferred embodiments, as illustrated, the dispensing heads 20(I), 20(II), 20(III), 20(IV) are subjected to an oscillating movement W along a direction parallel to the transverse direction T, so that the vertical curtains 2 deposit the coating ingredient on the respective products 101 forming thereon a continuous coating 102 characterized by a perimeter edge 102A with a wavy profile, extending parallel to the feed path K and delimiting the coated portion of the product 101 from the adjacent uncoated portion.

The wavy profile thus obtained for the coating 102 constitutes a decorative pattern capable of making the products manufactured through the described method even more appealing to consumers.

Conversely, it can be noted that such an aesthetic result cannot in any way be achieved through a prior art coating method, since in a known method the vertical curtain is dispensed by a hopper that does not allow any control over the deposition of the coating ingredient, and moreover the subsequent step of removing part of the coating ingredient via an air blowing device would clearly have the effect of erasing any previously formed ornamental pattern.

In one or more preferred embodiments, as illustrated, the dispensing heads 20(I), 20(II), 20(III), 20(IV) are carried by a common carriage mobile on a guide (not shown) along a direction parallel to the transverse direction T, which is actuated, in operation, with a reciprocating linear motion to subject the dispensing heads to said oscillating movement W.

The dispensing heads 20 may be carried by the aforementioned carriage together with their respective components, namely the feed conduit 26, the pressure generating unit 27 and the tank 29; alternatively, for each dispensing head 20, the tank 29 and the pressure generating unit 27 may instead be arranged on a stationary structure, and the dispensing head may be connected to them via a feed conduit 26 capable of allowing relative movement between the head and the other two components.

In one or more preferred embodiments, like the one illustrated, the mutual distance D along the feed path K, between each dispensing head and the respective adjacent dispensing head that is in a misaligned position (relative to a direction parallel to the transverse direction T), is in a given correlation with an amplitude of the aforementioned oscillating movement W, such that, despite the vertical curtains 2 dispensed by the two dispensing heads impinging the respective products 101 of the row of products 100 at different times, the perimeter edges 102A of the coatings 102 formed on such products by the two dispensing heads are mutually aligned and either in phase or in phase opposition with each other.

In particular, in one or more embodiments, like the one illustrated, wherein the dispensing heads 20(I), 20(II), 20(III), 20(IV) are arranged to form, in pairs, symmetrical coatings 102 on adjacent products 101 of the row of products 100, said given correlation is such that the perimeter edges 102A of the coatings 102 formed on each pair of adjacent products are mutually aligned and in phase opposition with each other.

In an alternative embodiment (not illustrated) wherein, conversely, the dispensing heads 20(I), 20(II), 20(III), 20(IV) are arranged to form coatings 102 with the same given orientation on all products 101 of the row of products 100, said given correlation is such that the perimeter edges 102A of the coatings 102 of all products in the row are mutually aligned and in phase with each other.

In both embodiments, all coatings 102 formed on the row of products 100 have identical wavy edges 102A, both in terms of how they develop with a wavy pattern and in terms of their starting and ending points.

This capability to produce coated products characterized by a decorative pattern and all identical to each other makes the solution described herein highly appreciable from the standpoint of the wide possibilities it offers in terms of production variety, as well as the production quality it is simultaneously able to guarantee.

Naturally, without departing from the principle of the invention, the implementation details and embodiments may vary, even significantly, from what has been described herein by way of non-limiting example, without thereby departing from the scope of the invention as defined by the appended claims.

## Claims

1. Method for coating food products, comprising:
- providing a coating ingredient and forming a vertical curtain (2) with the coating ingredient in free fall;
- advancing, in succession, a plurality of rows of products (100) along a feed path (K), wherein the products of each row of products are mutually aligned along a common reference axis (Xi) parallel to a direction (T) transverse to the feed path (K);
- impinging the products (101) of each row of products (100) with the vertical curtain (2) to form a continuous coating (102) with the coating ingredient that deposits on them;
said method being **characterized in that** said step of forming a vertical curtain (2) includes:
- dispensing the coating ingredient through a dispensing slit (22) of a dispensing head (20), and
- feeding the coating ingredient to the dispensing slit (22) via a feed conduit (26) inside which the coating ingredient is maintained at a predetermined pressure by a pressure generating unit (27), so that a flow of the coating ingredient of a given flow rate is dispensed through said dispensing slit (22).

2. Method according to claim 1, wherein said dispensing slit (22) defines a flow section having a width not exceeding 250 microns.

3. Method according to claim 1 or 2, wherein impinging the products (101) of each row of products (100) with the vertical curtain (2) includes simultaneously advancing the row of products along the feed path (K) to distribute the coating ingredient on the products along the feed path (K), thereby forming said continuous coating (102).

4. Method according to any one of the preceding claims, wherein said step of forming a vertical curtain (2) includes providing a plurality of dispensing heads (20(I), 20(II), 20(III), 20(IV)) equal to the number of products in each row of products (100),
wherein the dispensing heads (20(I), 20(II), 20(III), 20(IV)) of said plurality are mutually spaced along the direction (T) transverse to the feed path (K) and each comprise a dispensing slit extending longitudinally along the transverse direction (T) for a limited length so that the vertical curtain (2) dispensed by each dispensing head impinges only a respective product of the row of products and, optionally, a product adjacent thereto in the row of products,

5. Method according to claim 4, wherein said step of impinging the products of each row of products with the vertical curtain (2) comprises:
- via said plurality of dispensing heads (20(I), 20(II), 20(III), 20(IV)), dispensing a plurality of vertical curtains (2) equal to the number of products in each row of products (100) and configured to cover, by virtue of their width along the direction (T) transverse to the feed path (K), the upper sides of the products (101) only partially, i.e. incompletely; and
- subjecting said plurality of dispensing heads (20(I), 20(II), 20(III), 20(IV)) to an oscillating movement (W) along the direction (T) transverse to the feed path (K), so as to form, on each product (101) of each row of products (100), a continuous coating (102) **characterized by** a perimeter edge (102A) with a wavy profile extending parallel to the feed path (K) and delimiting a portion of the product (101) covered by the continuous coating (102) of the coating ingredient, relative to an adjacent uncoated portion.

6. Method according to claim 4 or 5, wherein the dispensing heads (20(I), 20(II), 20(III), 20(IV)) of said plurality of dispensing heads are mutually arranged in a misaligned condition with reference to a direction parallel to the transverse direction (T), such that each dispensing head is positioned along the feed path (K) at a position differing from the position of at least one dispensing head adjacent thereto in the plurality of dispensing heads, so that the vertical curtain (2) dispensed by each dispensing head impinges a respective product of the row of products at a different time than the vertical curtain (2) dispensed by the at least one adjacent dispensing head.

7. Method according to claim 6, when dependent on claim 5, wherein the dispensing heads (20(I), 20(II), 20(III), 20(IV)) of said plurality of dispensing heads move in unison according to said oscillating movement, and wherein the mutual distance (D) along the feed path (K), between each dispensing head and the at least one dispensing head adjacent thereto in the plurality of dispensing heads, is in a given correlation with an amplitude of said oscillating movement, such that, despite the vertical curtain dispensed by each dispensing head impinging a respective product of the row of products at a different time than the vertical curtain dispensed by the at least one adjacent dispensing head, the perimeter edges (102A) with wavy profiles of the coatings (102) formed on the products of each row of products (100) are mutually aligned and either in phase or in phase opposition with each other.

8. Method according to any of the preceding claims, wherein said dispensing head (20) comprises a movable shutter member (24) configured to vary a flow section of a passage for the coating ingredient through said dispensing slit (22), and wherein said step of forming the vertical curtain preferably includes regulating the flow rate of the coating ingredient dispensed through the dispensing slit (22) via said shutter member (24).

9. Food products coated with a coating ingredient through a method according to any one of the preceding claims.

10. Coating system for implementing a coating method according to any one of claims 1 to 8, said system comprising:
- a conveyor (10) for advancing, in succession, a plurality of rows of products (100) along a feed path (K), wherein the products (101) of each row of products (100) are aligned along a common reference axis (Xi) parallel to a direction (T) transverse to the feed path (K);
- at least one dispensing head (20) comprising a dispensing slit (22) configured to dispense a coating ingredient in the form of a vertical curtain (2) in free fall, which impinges the products of each row of products (100) advanced by the conveyor (10) along the feed path (K),
- a feed conduit (26) configured to feed the coating ingredient to the dispensing slit (22) of the dispensing head (20); and
- a pressure generating unit (27) configured to maintain the coating ingredient at a predetermined pressure inside said feed conduit (26), so that a flow of the coating ingredient of a given flow rate is dispensed through said dispensing slit (22).

11. System according to claim 10, wherein said at least one dispensing head comprises a plurality of dispensing heads (20(I), 20(II), 20(III), 20(IV)) that are mutually spaced along the direction (T) transverse to the feed path (K), and each comprise a dispensing slit (22) extending longitudinally along the transverse direction (T) for a limited length so that the vertical curtain (2) dispensed by each dispensing head impinges only a respective product of the row of products (100) and, optionally, a product adjacent thereto in the row of products.

12. System according to claim 11, wherein the dispensing heads (20(I), 20(II), 20(III), 20 (IV) of said plurality of dispensing heads are mutually arranged in a misaligned condition with reference to a direction parallel to the transverse direction (T), such that each dispensing head is positioned along the feed path (K) at a position differing from the position of at least one dispensing head adjacent thereto in the plurality of dispensing heads, so that the vertical curtain (2) dispensed by each dispensing head impinges a respective product of the row of products at a different time than the vertical curtain (2) dispensed by the at least one adjacent dispensing head.

13. System according to claim 11 or 12, wherein the dispensing heads (20(I), 20(II), 20(III), 20(IV)) of said plurality of dispensing heads are movable according to an oscillating movement (W) along the direction (T) transverse to the feed path (K) so as to form, on each product of each row of products (100), a continuous coating (102) **characterized by** a perimeter edge (102A) with a wavy profile extending parallel to the feed path (K) and delimiting a portion of the product (101) covered by the continuous coating (102) of the coating ingredient, relative to an adjacent uncoated portion.

14. System according to claim 12, wherein the dispensing heads (20(I), 20(II), 20(III), 20 (IV) of said plurality of dispensing heads are configured to move in unison according to said oscillating movement (W), and wherein the mutual distance (D) along the feed path (K), between each dispensing head and the at least one dispensing head adjacent thereto in the plurality of dispensing heads, is in a given correlation with an amplitude of said oscillating movement (W), such that, despite the vertical curtain dispensed by each dispensing head impinging a respective product of the row of products at a different time than the vertical curtain dispensed by the at least one adjacent dispensing head, the perimeter edges (102A) with wavy profiles of the coatings (102) formed on the products of each row of products (100) are mutually aligned and either in phase or in phase opposition with each other.

15. System according to any of claims 10 to 14, wherein said at least one dispensing head (20) comprises a shutter member (24) that is configured to engage the dispensing slit (22) and is linearly movable, preferably along a vertical direction, between a closed position, wherein the passage for the coating ingredient through the dispensing slit (22) is closed by the shutter member (24), and an open position, wherein said passage is instead open and the coating ingredient can thus be dispensed through the dispensing slit (22), and
wherein, preferably, said shutter member (24) is further configured to vary a flow section of said passage for the coating ingredient through the dispensing slit (22) depending on the position of the shutter member along its direction of movement.
